# EUROPÄISCHE PATENTSCHRIFT

(11) **EP 3 536 570 B1**
(45) Veröffentlichungstag und Bekanntmachung des Hinweises auf die Patenterteilung: **22.07.2020**
(21) Anmeldenummer: 19157780.8
(22) Anmeldetag: 18.02.2019
(51) Int. Cl.: B60T 13/68

(54) **BREMSANLAGE FÜR EINEN FAHRZEUGZUG SOWIE DAMIT AUSGESTATTETE ZUGMASCHINE**
BRAKING ASSEMBLY FOR A VEHICLE TRAIN AND MACHINE EQUIPPED WITH SAME
INSTALLATION DE FREINAGE POUR UN VÉHICULE TRACTÉ AINSI QUE TRACTEUR ÉQUIPÉ D'UNE TELLE INSTALLATION

(30) Priorität: 23.02.2018 DE 102018104143
(43) Veröffentlichungstag der Anmeldung: 11.09.2019
(73) Patentinhaber: WABCO GmbH, 30453 Hannover (DE)
(72) Erfinder: GOERS, Andreas, 30982 Pattensen (DE); MÜLLER, Thomas, 30655 Hannover (DE); SCHMIDT, Jakob Friedrich, 30449 Hannover (DE)
(74) Vertreter: Copi, Joachim

(56) Entgegenhaltungen:
- EP-A1- 2 998 177
- EP-A2- 0 394 065
- DE-A1-102014 002 614

## Beschreibung

Die Erfindung betrifft eine Bremsanlage für einen Fahrzeugzug, bestehend aus einem Zugfahrzeug mit einer Zugfahrzeugbremse und einem Anhängefahrzeug mit einer Anhängerbremse, wobei das Zugfahrzeug eine aus einem elektrischen Energiespeicher des Zugfahrzeugs versorgte Zündanlage für einen Antriebsmotor des Zugfahrzeugs aufweist, wobei die Bremsanlage druckmittelbetrieben ist, mit einem Anhängersteuerventil und einem Feststellbremsmodul, welche elektrisch steuerbar sind, und mit einer mit dem Anhängersteuerventil sowie mit dem Feststellbremsmodul elektrisch verbundenen elektronischen Steuereinheit zum Steuern der Anhängerbremse des Anhängefahrzeugs, wobei das Feststellbremsmodul eingangsseitig mit einem Druckmittelspeicher der Bremsanlage des Fahrzeugzugs sowie ausgangsseitig mit einem Steuerdruckeingang des Anhängersteuerventils zur schaltbaren Druckbeaufschlagung oder Druckentlastung des Steuerdruckeingangs des Anhängersteuerventils druckmittelverbunden ist, und wobei das Feststellbremsmodul eine Redundanzschaltung zur Druckbeaufschlagung oder Druckentlastung des Steuerdruckeingangs des Anhängersteuerventils auch für den Fall einer Betriebsstörung oder eines Ausfalls der elektronischen Steuereinheit aufweist.

Bei einem Fahrzeugzug mit einer pneumatischen/hydraulischen Bremsanlage ist ein Feststellbremsmodul auch zur Steuerung einer Anhängerbremse des Anhängefahrzeugs ausgebildet. Die Ansteuerung erfolgt dabei in der Regel mittels einer elektronischen Steuereinheit über ein Anhängersteuerventil, welches eine invertierende Steuercharakteristik aufweist. Wenn ein Steuerdruckeingang des Anhängersteuerventils mit Druckmittel beaufschlagt wird, im Falle einer pneumatischen Bremse also belüftet wird, werden die Bremszylinder des Anhängefahrzeugs druckentlastet, also entlüftet. Zum Feststellen des Anhängefahrzeugs mittels der Anhängerbremse wird der Steuerdruckeingang des Anhängersteuerventils entlüftet, um die Anhängerbremszylinder zu belüften und die Anhängerbremse somit zu betätigen.

Damit es bei einer Betriebsstörung oder eines Ausfalls der elektronischen Steuerung der Anhängerbremse, beispielsweise aufgrund von Übertragungsfehlern, beschädigten Leitungen, Fehlfunktionen, Fremdspannungen oder Kurzschlüssen nicht zu einem unbeabsichtigten und möglicherweise sicherheitskritischen Feststellen der Anhängerbremse beim Fahren oder einem unbeabsichtigten Lösen der Anhängerbremse beim Halten des Fahrzeugzuges kommen kann, sind geeignete Sicherheitsmaßnahmen vorgeschrieben. Für einen landwirtschaftlich genutzten Anhänger ist dies beispielsweise in der EU-Norm 2015/68 für Fahrzeugbremsen landwirtschaftlich genutzter Zugfahrzeug-Anhänger-Kombinationen geregelt.

Es ist bekannt, an einem Fahrzeugzug auch die Feststellbremse des Anhängers vom Fahrer aus über einen Hebel pneumatisch zu betätigen. Bei einer derartigen elektro-pneumatischen Handbremse wird der letzte Zustand üblicherweise durch ein bistabiles pneumatisches Ventil gehalten. Derartige bistabile Magnetventile ermöglichen in einem Fluidsystem, zum Beispiel einem Druckluftsystem, die Verstellung zwischen zwei Ventilstellungen, wobei beide Ventilstellungen im stromlosen Zustand des Magnetventils gehalten werden können. Ein bistabiles Magnetventil weist eine Permanentmagneteinrichtung und einen relativ zur Permanentmagneteinrichtung verstellbaren Anker mit bestrombaren Ankerspulen auf. Je nach Bestromung einer ersten Ankerspule oder zweiten Ankerspule kann der Anker in seine erste Ankerstellung oder zweite Ankerstellung verstellt werden, in denen er auch nach Abstellen des Schaltstroms, also im unbestromten Zustand, sicher gehalten wird. Elektro-pneumatische Handbremsen benötigen somit im abgestellten Zustand des Fahrzeugzuges keine Bestromung. Außerdem ist auch während der Fahrt, also bei ausgeschalteter Feststellbremse, kein Strom und somit kein Energieverbrauch erforderlich.

Aus der DE 10 2012 000 435 A1 ist ein Feststellbremsmodul für eine druckmittelbetriebene Bremsanlage eines zur Ankoppelung eines Anhängers geeigneten Fahrzeugs bekannt. Das Feststellbremsmodul weist einen Anhängersteuerventilanschluss zur Verbindung mit einem Anhängersteuerventil zum Steuern einer Anhängerbremse des Anhängers auf. Weiter weist das Feststellbremsmodul ein Ansteuerventil auf, welches ein bistabiles Elektromagnetventil mit einer bistabilen Schaltfunktion ist. Dadurch kann das Fahrzeug mit dem Feststellbremsmodul wahlweise mit betätigter oder gelöster Anhängerbremse des Anhängers sicher abgestellt werden. Das Ansteuerventil weist einen Ansteuerventileingang auf, durch den auch im Falle eines Spannungsabfalls am Feststellbremsmodul in einem ersten Zustand des Feststellbremsmoduls zur Druckminderung sowie in einem alternativ einnehmbaren zweiten Zustand des Feststellbremsmoduls zur Druckerhöhung am Anhängersteuerventilanschluss Druckmittel führbar ist.

Aus der DE 10 2014 002 614 A1 ist ein Anhängersteuerventil für ein hydraulisch gebremstes Zugfahrzeug bekannt, welches mit einem pneumatisch gebremsten Anhängefahrzeug koppelbar ist. Das Zugfahrzeug weist eine hydraulisch betätigte Betriebsbremse auf, welche wenigstens einen durch ein Bremsbetätigungsorgan betätigbaren Hauptbremszylinder zur Erzeugung eines Hydraulikdrucks in wenigstens einem Radbremszylinder wenigstens eines Rades des Zugfahrzeuges aufweist, wobei wenigstens ein Drucksensor an eine vom Hauptbremszylinder abgehende hydraulische Druckleitung zur Erfassung des hydraulischen Drucks angeschlossen ist. Das Anhängersteuerventil weist ein elektro-pneumatisches Druckregelmodul mit einer elektronischen Steuerung auf, welche wenigstens die Drucksignale von dem Drucksensor erhält und in Steuerimpulse für in dem elektro-pneumatischen Druckregelmodul angeordnete elektro-magnetische Steuerventile umsetzt. Diese Steuerventile sind eingangsseitig über einen pneumatischen Vorratsdruckeingang mit einem Druckluftbehälter und ausgangseitig über einen pneumatischen Steuerdruckausgang mit einem Steuerdruck-Kupplungskopf zum Anschließen an die Anhängerbremse verbunden. Weiter weist das Anhängersteuerventil eine Redundanz-Ventilanordnung auf, welche über einen hydraulischen Steuereingang an eine von dem Hauptbremszylinder abgehende hydraulische Druckleitung und über einen pneumatischen Eingang mit dem Druckluftbehälter verbunden ist. Der hydraulische Steuerdruck bestimmt das Maß des pneumatischen Ausgangsdrucks an einem pneumatischen Ausgang der Redundanz-Ventilanordnung. Im Falle eines Ausfalls wenigstens einer für den Betrieb des Anhängersteuerventils relevanten elektrischen oder elektronischen Komponente ist der pneumatische Ausgang der Redundanz-Ventilanordnung mit dem Steuerdruck-Kupplungskopf verbunden, während bei fehlerfreiem Betrieb der für den Betrieb des Anhängersteuerventils relevanten elektrischen oder elektronischen Komponenten der pneumatische Ausgang der Redundanz-Ventilanordnung vom Steuerdruck-Kupplungskopf getrennt ist.

Vor diesem Hintergrund lag der Erfindung die Aufgabe zugrunde, eine Bremsanlage für einen Fahrzeugzug vorzustellen, welche betriebssicher ist und die zudem ein kostengünstig herstellbares elektronisch gesteuertes Feststellbremsmodul für eine Feststellbremsfunktion einer Anhängerbremse eines Anhängefahrzeugs zur Verfügung stellt. Die Bremsanlage soll auch bei einer Störung oder einem Ausfall einer elektronischen Steuerung der Anhängerbremse jederzeit einen sicheren Zustand der Anhängerbremse gewährleisten. Insbesondere soll ein solches Feststellbremsmodul für den Einsatz in einer Bremsanlage eines landwirtschaftlich genutzten Fahrzeugzuges geeignet sein.

Die Lösung dieser Aufgabe wird mit einer Bremsanlage erreicht, welche die Merkmale des unabhängigen Patentanspruchs aufweist. Vorteilhafte Ausgestaltungen und Weiterbildungen dieser Bremsanlage sind in den abhängigen Ansprüchen definiert.

Der Erfindung lag die Erkenntnis zugrunde, dass bei einer Bremsanlage eines Fahrzeugzuges eine Selbsthaltefunktion eines elektronischen Schaltwerks aus miteinander verknüpften Logik-Bausteinen zum temporären Einfrieren von Eingangs- und/oder Ausgangssignalen genutzt werden kann, um über die Ansteuerung eines zusätzlich angeordneten Redundanzventils eine betriebssichere Feststellbremsfunktion einer Anhängerbremse auch im Redundanzfall eines Ausfalls einer elektronischen Steuerung der Bremsanlage zu gewährleisten.

Die Erfindung geht daher aus von einer Bremsanlage für einen Fahrzeugzug, bestehend aus einem Zugfahrzeug mit einer Zugfahrzeugbremse und einem Anhängefahrzeug mit einer Anhängerbremse, wobei das Zugfahrzeug eine aus einem elektrischen Energiespeicher des Zugfahrzeugs versorgte Zündanlage für einen Antriebsmotor des Zugfahrzeugs aufweist, wobei die Bremsanlage druckmittelbetrieben ist, mit einem Anhängersteuerventil und einem Feststellbremsmodul, welche elektrisch steuerbar sind, und mit einer mit dem Anhängersteuerventil sowie mit dem Feststellbremsmodul elektrisch verbundenen elektronischen Steuereinheit zum Steuern der Anhängerbremse des Anhängefahrzeugs, wobei das Feststellbremsmodul eingangsseitig mit einem Druckmittelspeicher der Bremsanlage des Fahrzeugzugs sowie ausgangsseitig mit einem Steuerdruckeingang des Anhängersteuerventils zur schaltbaren Druckbeaufschlagung oder Druckentlastung des Steuerdruckeingangs des Anhängersteuerventils druckmittelverbunden ist, und wobei das Feststellbremsmodul eine Redundanzschaltung zur Druckbeaufschlagung oder Druckentlastung des Steuerdruckeingangs des Anhängersteuerventils auch für den Fall einer Betriebsstörung oder eines Ausfalls der elektronischen Steuereinheit aufweist.

Zur Lösung der gestellten Aufgabe sieht die Erfindung vor,
- dass das Feststellbremsmodul ein als Steuerventil ausgebildetes erstes Wegeventil, ein als Redundanzventil ausgebildetes zweites Wegeventil und ein druckgesteuertes Wechselventil aufweist,
- wobei das Steuerventil und das Redundanzventil jeweils eingangsseitig mit dem Druckmittelspeicher und ausgangsseitig mit jeweils einem Eingang des Wechselventils druckmittelverbunden sind,
- wobei ein Ausgang des Wechselventils mit dem Steuerdruckeingang des Anhängersteuerventils druckmittelverbunden ist, so dass ein Eingangsdruck an einem oder beiden Eingängen des Wechselventils an den Steuerdruckeingang des Anhängersteuerventils durchleitbar ist,
- wobei das Steuerventil über eine erste elektrische Schaltvorrichtung schaltbar mit dem elektrischen Energiespeicher des Zugfahrzeugs verbindbar ist,
- wobei das Redundanzventil über eine zweite elektrische Schaltvorrichtung schaltbar mit dem elektrischen Energiespeicher und mit der Zündanlage des Zugfahrzeugs verbindbar ist,
- wobei in einer ersten Schaltstellung des Steuerventils und/oder des Redundanzventils der Druckmittelspeicher von dem Steuerdruckeingang des Anhängersteuerventils abgesperrt ist und in einer zweiten Schaltstellung des Steuerventils und/oder des Redundanzventils der Druckmittelspeicher mit dem Steuerdruckeingang des Anhängersteuerventils druckmittelverbunden ist,
- und dass die elektronische Steuereinheit ein elektronisches Schaltwerk mit einer Selbsthaltefunktion aufweist,
- wobei das Redundanzventil und das Steuerventil über dieses Schaltwerk miteinander elektronisch verknüpft und steuerbar sind,
- wobei die Selbsthaltefunktion die jeweils aktuelle erste Schaltstellung oder zweite Schaltstellung des Redundanzventils oder des Steuerventils speichert,
- so dass im Falle einer erkannten Betriebsstörung oder eines Ausfalls der elektronischen Steuereinheit die letzte fehlerfreie Schaltstellung des Steuerventils oder des Redundanzventils gehalten wird, solange die elektronische Steuereinheit nicht in einen betriebssicheren Ruhezustand wechselt oder die Zündanlage nicht ausgeschaltet wird.

Unter einem elektronischen Schaltwerk wird eine aus mehreren Logik-Schaltelementen, wie UND-Gliedern, ODER-Gliedern, Invertern und/oder Übertragungsgattern aufgebaute Anordnung zur Durchführung logischer Verknüpfungen mit der zusätzlichen Fähigkeit einer Selbsthaltefunktion, einzelne Variablenzustände zu speichern, verstanden.

Durch diese Anordnung wird eine Bremsanlage für einen Fahrzeugzug mit einem kostengünstigen Feststellbremsmodul für eine betriebssichere Feststellbremsfunktion einer Anhängerbremse zur Verfügung gestellt. Insbesondere werden die Regularien für die Ansteuerung einer Anhängerbremse eines landwirtschaftlichen Fahrzeugzuges nach EU 2015/68 erfüllt. Gemäß der Erfindung sind für das Feststellbremsmodul keine kostenaufwendigen Bistabil-Magnetventile erforderlich.

Demnach wird durch ein elektronisches Schaltwerk bei einem Ausfall der elektronischen Steuereinheit der Bremsanlage die letzte Schaltstellung des Steuerventils des Feststellbremsmoduls durch das Redundanzventil übernommen. Mittels der Selbsthaltefunktion des Schaltwerks wird beim Erkennen einer Betriebsstörung der letzte Zustand des Steuerventils auf das Redundanzventil übertragen und beibehalten. Dadurch kann die Funktion des Feststellbremsmoduls aufrechterhalten werden.

Das Steuerventil und das Redundanzventil sind über ein Wechselventil an den Steuerdruckeingang des Anhängersteuerventils angeschlossen. Das Wechselventil arbeitet als ein Prioritätsventil beziehungsweise Select-High-Ventil, so dass bei offen geschalteten Steuer- und/oder Redundanzventilen stets der höhere der an den beiden Eingängen des Wechselventils anliegenden Drücke oder bei nur an einem Eingang anliegendem Druck oder bei gleichen Drücken an den Eingängen dieser Druck an den Steuerdruckeingang des Anhängersteuerventils angelegt wird.

Befindet sich das Steuerventil beispielsweise in seiner offenen Stellung wenn ein Steuerungsfehler oder ein Steuerungsausfall auftritt, also in Druckverbindung zwischen dem Druckspeicher mit dem Druckmittelvorrat und dem zugehörigen Wechselventileingang, wird der Steuerdruckeingang des Anhängersteuerventils auch beim Ausfall des Steuerventils in jedem Fall weiterhin über das Redundanzventil belüftet, da dieses mittels der Selbsthaltefunktion offengehalten wird. Die Selbsthaltefunktion wird insbesondere solange aufrechtgehalten wie die Zündung des Fahrzeugs eingeschaltet ist, also der Fahrzeugzug nicht geparkt und die Zündung ausgeschaltet wird oder solange die Steuerung nicht selbststätig in einen betriebssicheren Zustand wechselt, der eine mögliche weitere Fehlsteuerung ausschließt.

Weist das Anhängersteuerventil wie üblich eine invertierende Schaltcharakteristik auf, wird am Ausgang des Anhängersteuerventils, also am "gelben" Steuerdruck-Kupplungskopf entsprechend kein Steuerdruck erzeugt, wenn der Steuerdruckeingang mit dem Vorratsdruck aus dem Druckmittelspeicher beaufschlagt ist. Dadurch können die Bremszylinder des Anhängers beziehungsweise je nach Ansteuerung und Auslegungstyp der Anhängerbremse "Normalerweise Eingelegt" oder "Normalerweise Gelöst" vorhandene Federspeicherteile oder Betriebsteile dieser Bremszylinder nicht unbeabsichtigt belüftet werden.

Wenn sich das Steuerventil hingegen beim Auftreten eines elektronischen Steuerungsfehlers in seiner geschlossenen Stellung befindet, gilt das Entsprechende in umgekehrter Weise, wobei an dem Steuerdruckeingang des Anhängerventils kein Steuerdruck anliegt und entsprechend der invertierenden Schaltung des Anhängersteuerventils am Steuerdruck-Kupplungskopf des Anhängers keine Druckverminderung erzeugt wird. In jedem Fall bedeutet dies, dass der Anhänger im Fahrbetrieb nicht über die Feststellbremsfunktion ungewollt gebremst werden kann.

Gemäß einer Ausführungsform der Erfindung kann vorgesehen sein, dass das Steuerventil und das Redundanzventil als 3/2-Wegeventile ausgebildet sind, welche in Öffnungsrichtung elektromagnetisch betätigbar sind und in Ruhestellung durch Federkraft geschlossen sind. Vorteilhafterweise sind die Ventile für das Feststellbremsmodul 3/2-Wegeventile. Derartige Ventile sind Standardkomponenten ohne besondere Schwierigkeiten in der Herstellung und der Anwendung. Insbesondere sind keine teuren und aufwendig zu verschaltenden Bistabil-Magnetventil erforderlich.

Gemäß einer weiteren Ausführungsform der Erfindung kann vorgesehen sein, dass das Steuerventil und das Redundanzventil in einem fehlerfreien Normalbetrieb der elektronischen Steuereinheit unabhängig voneinander schaltbar sind. Dadurch entsteht durch das Redundanzventil im fehlerfreien Betrieb kein unnötiger Energieverbrauch.

Gemäß einer weiteren Ausführungsform der Erfindung kann vorgesehen sein, dass die erste Schaltvorrichtung und die zweite Schaltvorrichtung für die elektrische Versorgung des Steuerventils und des Redundanzventils voneinander entkoppelte elektrische Schaltkreise aufweisen, wobei dem Steuerventil ein erster High-Side-Schalter zugeordnet ist, welcher den Magnetkreis des Steuerventils schaltbar mit dem elektrischen Energiespeicher verbindet, wobei dem Steuerventil ein erster Low-Side-Schalter zugeordnet ist, welcher den Magnetkreis des Steuerventils schaltbar auf Masse legt, und wobei dem Redundanzventil ein zweiter High-Side-Schalter zugeordnet ist, welcher den Magnetkreis des Redundanzventils schaltbar mit der Zündanlage und mit dem elektrischen Energiespeicher des Zugfahrzeugs verbindet, und wobei dem Redundanzventil ein zweiter Low-Side-Schalter zugeordnet ist, welcher den Magnetkreis des Redundanzventils schaltbar auf Masse legt.

Demnach kann die Ansteuerung des Magnetkreises des Redundanzventils durch die Speicherschaltung des elektronischen Schaltwerks wahlweise auf der Anschlussseite des elektrischen Energiespeichers beziehungsweise am Zündschalter der Zündanlage des Fahrzeugs oder auf der Masseseite erfolgen. Die Ansteuerung des Magnetkreises des Steuerventils für den fehlerfreien Normalbetrieb kann wahlweise auf der Anschlussseite des elektrischen Energiespeichers oder auf der Masseseite erfolgen. Dadurch kann das elektronische Schaltwerk mit relativ geringem Aufwand in eine bestehende elektronische Steuereinheit integriert werden.

Schließlich betrifft die Erfindung auch ein Fahrzeug, wie beispielsweise eine landwirtschaftliche Zugmaschinen-Anhänger-Kombination, Sattelzug oder Brückenzug, mit einer Bremsanlage mit den oben geschilderten Merkmalen von wenigstens einem der Vorrichtungsansprüche.

Die Erfindung wird nachstehend anhand von einem in der beigefügten Zeichnung dargestellten Ausführungsbeispiel näher erläutert. In der Zeichnung zeigt
Fig. 1 ein vereinfachtes Schaltschema einer Bremsanlage gemäß der Erfindung,
Fig. 2 schematisch ein elektronisches Schaltwerk zur Steuerung eines Feststellbremsmoduls für eine Anhängerbremse gemäß Fig. 1, und
Fig. 3 ein Impulsdiagramm des Schaltwerks gemäß Fig. 2.

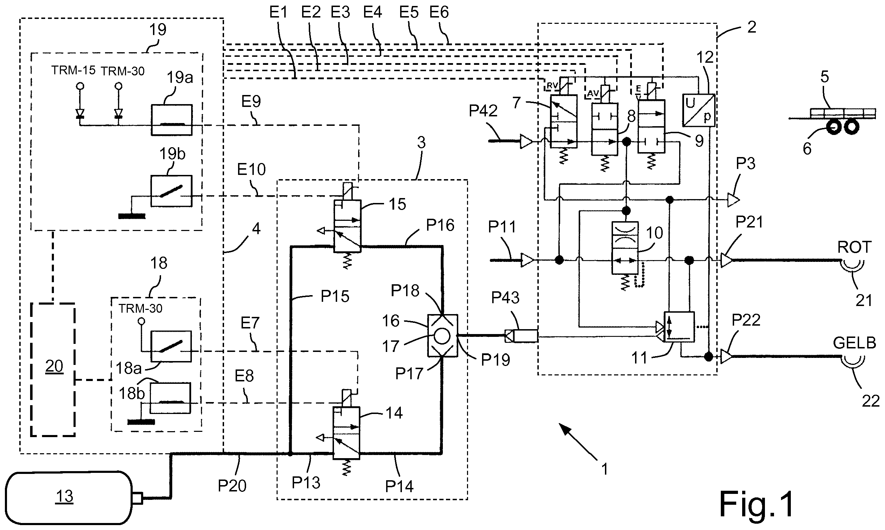

Fig. 1 zeigt eine Bremsanlage 1, wie sie beispielsweise für einen druckluftgebremsten landwirtschaftlichen Fahrzeugzug, bestehend aus einem nicht dargestellten Zugfahrzeug und einem in Fig. 1 lediglich angedeuteten Anhängefahrzeug 5, vorgesehen sein kann. Die Darstellung in Fig. 1 und die folgende Beschreibung beschränken sich im Wesentlichen auf die für die Erfindung relevanten Komponenten einer derartigen Bremsanlage. Die pneumatischen Anschlüsse und Leitungen eines Anhängersteuerventils sind mit Bezugsziffern in Anlehnung an die DIN ISO 6786 versehen. Zur besseren Abgrenzung zu den Bezugsziffern der Bauteile ist allen Bezugsziffern von pneumatischen Leitungen und Anschlüssen ein Präfix "P" und allen Bezugsziffern von elektrischen Leitungen ein Präfix "E" vorangestellt.

Demnach weist die in Fig. 1 in dargestellte Bremsanlage 1 ein elektro-pneumatisches Anhängersteuerventil 2 und ein elektro-pneumatisches Feststellbremsmodul 3 auf. Dem Anhängersteuerventil 2 und dem Feststellbremsmodul 3 zugeordnet sowie mit diesen elektrisch verbunden ist eine elektronische Steuereinheit 4. Weiterhin weist die Bremsanlage 1 ein nicht dargestelltes Betriebsbremsmodul für eine Betriebsbremsfunktion einer Betriebsbremse des Zugfahrzeugs auf, welche hier aber keine Rolle spielt und daher nicht weiter behandelt werden muss. Ferner weist das Feststellbremsmodul 3 nicht dargestellte Ventilkomponenten für eine Feststellbremsfunktion des Zugfahrzeugs auf, welche hier ebenfalls keine Rolle spielen und deswegen nicht weiter behandelt werden. Dafür sei auf die eingangs erwähnte DE 10 2012 000 435 A1 verwiesen. Die folgende Beschreibung konzentriert sich auf die in Fig. 1 dargestellten Komponenten des Anhängersteuerventils 2 und der noch näher zu beschreibenden, für die Erfindung relevanten Komponenten des Feststellbremsmoduls 3 und der zugeordneten elektronischen Steuereinheit 4 zur Steuerung einer Feststellbremsfunktion einer in Fig. 1 lediglich angedeuteten Anhängerbremse 6 des Anhängefahrzeugs 5.

Das Anhängersteuerventil 2 entspricht weitestgehend einem bekannten Anhängersteuerventil. Es weist drei als elektromagnetische Wegeventils ausgebildete Regelventile 7, 8, 9 auf. Das erste Regelventil 7 ist als ein 3/2-Wegeventil ausgebildet und über eine erste sowie eine zweite elektrische Leitung E1, E2 mit der elektronischen Steuereinheit 4 elektrisch verbunden. Das zweite Regelventil 8 ist als ein 2/2-Wegeventil ausgebildet und über eine dritte sowie über eine vierte elektrische Leitung E3, E4 mit der elektronischen Steuereinheit 4 elektrisch verbunden sowie eingangsseitig pneumatisch an das erste Regelventil 7 angeschlossen. Das dritte Regelventil 9 ist ebenfalls als ein 2/2-Wegeventil ausgebildet und über eine fünfte sowie eine sechste elektrische Leitung E5, E6 mit der elektronischen Steuereinheit 4 elektrisch verbunden und eingangsseitig pneumatisch mit dem zweiten Regelventil 8 sowie mit einem Drosselventil 10 verbunden. Gemäß einer anderen Ausführungsform sind die drei Regelventile 7, 8, 9 mit jeweils einer Steuerleitung sowie mit einer über einen Sicherheitsschalter geführten gemeinsamen Masseleitung mit der Steuereinheit 4 elektrisch verbunden. Das Drosselventil 10 kann auch als Abrisssicherungsventil bezeichnet werden.

Außerdem weist das Anhängersteuerventil 2 ein noch näher zu beschreibendes Druckventil 11 beziehungsweise Relaisventil sowie einen Drucksensor 12 auf, welcher insbesondere den Druck an einem pneumatischen Steuerdruckausgang P22 des Anhängersteuerventils 2 erfasst und als Steuerparameter zur Verfügung stellt. Das Anhängersteuerventil 2 weist drei pneumatische Eingänge P11, P42, P43 sowie drei pneumatische Ausgänge P3, P21, P22 auf. Der Vorratsdruck aus einem Druckmittelspeicher 13 wird über eine nicht dargestellte pneumatische Verbindung und einen als pneumatischen Vorratsdruckeingang P11 ausgebildeten ersten pneumatischen Anhängersteuerventileingang durch das Anhängersteuerventil 2 hindurch geleitet und über einen als Vorratsdruckausgang P21 ausgebildeten ersten pneumatischen Anhängersteuerventilausgang zu einem mit "ROT" markierten Vorratsdruck-Kupplungskopf 21 geführt. Dieser Vorratsdruck-Kupplungskopf 21 ist an einen entsprechenden Kupplungskopf einer nicht dargestellten Vorratsleitung der Anhängerbremse 6 des Anhängefahrzeugs 5 ankoppelbar.

Das erste Regelventil 7 ist pneumatisch direkt an einen als pneumatischen Redundanzdruckeingang P42 ausgebildeten zweiten pneumatischen Anhängersteuerventileingang angeschlossen. Das noch näher zu beschreibende Feststellbremsmodul 3 ist pneumatisch an einen als Steuerdruckeingang P43 ausgebildeten dritten pneumatischen Anhängersteuerventileingang angeschlossen. Der Steuerdruckeingang P43 stellt eine pneumatische Verbindung zwischen dem Feststellbremsmodul 3 und dem druckabhängig schaltenden mechanischen Druckventil 11 des Anhängersteuerventils 2 her.

Das Druckventil 11 ist eingangsseitig mit den übrigen genannten Ventilen 7, 8, 9, 10 des Anhängersteuerventils 2 sowie mit dem Vorratsdruckeingang P11 funktional verbunden. Das Druckventil 11 ist ferner ausgangsseitig über einen als Steuerdruckausgang P22 ausgebildeten zweiten pneumatischen Anhängersteuerventilausgang mit einem "Gelb" markierten Steuerdruck-Kupplungskopf 22 verbunden. An den Steuerdruck-Kupplungskopf 22 kann ein entsprechender Kupplungskopf einer nicht dargestellten Steuerdruckleitung der Anhängerbremse 6 angekoppelt werden. Die nicht dargestellte Steuerdruckleitung der Anhängerbremse 6 versorgt die ebenfalls nicht dargestellten Bremszylinder des Anhängefahrzeugs 5. Außerdem weist das Anhängersteuerventil 2 noch einen als Entlüftungsausgang P3 des Anhängersteuerventils 2 ausgebildeten dritten pneumatischen Anhängersteuerventilausgang auf.

Die elektrische und pneumatische Verschaltung der Ventile 7, 8, 9, 10, 11 des Anhängersteuerventils 2 und die sich daraus ergebende Funktionsweise des Anhängersteuerventils 2 ist an sich bekannt und muss hier nicht im Einzelnen beschrieben werden. Wichtig ist lediglich, dass das Anhängersteuerventil 2 eine invertierende Schaltcharakteristik aufweist. Diese besagt, dass eine Druckerniedrigung am Steuerdruckeingang P43 zu einer Druckerhöhung am Steuerdruckausgang P22 sowie eine Druckerhöhung am Steuerdruckeingang P43 zu einer Druckerniedrigung am Steuerdruckausgang P22 führt. Die Anhängerbremse 6 wird somit beispielsweise betätigt, wenn der Steuerdruckeingang P43 des Anhängersteuerventils 2 entlüftet wird, sowie gelöst, wenn der Steuerdruckeingang P43 des Anhängersteuerventils 2 belüftet wird, sofern die Anhängerbremse 6 nicht mittels der Betriebsbremse betätigt wird.

In den meisten Ländern ist es vorgeschrieben, dass im Parkzustand eines Fahrzeugzugs sowohl die Feststellbremse das Zugfahrzeugs als auch die Feststellbremse des Anhängefahrzeugs 5 eingelegt sein müssen. Während die Feststellbremse des Zugfahrzeugs üblicherweise durch Federkraft gehalten und durch Druckbeaufschlagung entgegen der Federkraft gelöst wird, wird die Feststellbremse des Anhängefahrzeugs 5 nach dem oben Gesagten durch die Druckkraft des Druckmittels gehalten. Bei einer längeren Standzeit des Fahrzeugzuges kann es zwar zu Druckverlusten in den Bremszylindern und damit zu einem Lösen der Anhängerbremse 6 kommen. Dafür kann die Bremsanlage 1 allerdings eine Anhängerkontrollfunktion aufweisen, die eine Überprüfung dahingehend ermöglicht, ob bei einem Nachlassen der Bremswirkung des Anhängefahrzeugs 5 der Fahrzeugzug alleine durch die Bremswirkung einer Feststellbremse des Zugfahrzeugs festgehalten werden kann. Umgekehrt muss sichergestellt sein, dass im Fahrbetrieb des Fahrzeugzuges bei einem Ausfall der elektronischen Steuerung der Bremsanlage 1 nicht ungewollt die Feststellbremse des Anhängefahrzeugs 5 eingelegt werden kann. Dies wird bei der Erfindung durch das Feststellbremsmodul 3 und dessen Ansteuerung erreicht.

Demnach weist das Feststellbremsmodul 3 ein Steuerventil 14 und ein Redundanzventil 15 auf, welche als elektromagnetische 3/2-Wegeventile ausgebildet sind, die im unbestromten Zustand durch Federkraft geschlossen und in bestromten Zustand geöffnet sind. Außerdem weist das Feststellbremsmodul 3 ein druckgesteuertes Wechselventil 16 auf, welches als ein Doppelrückschlagventil mit zwei pneumatischen Eingängen P17, P18 und einem pneumatischen Ausgang P19 ausgebildet ist.

Das Steuerventil 14 ist über eine erste pneumatische Leitung P20, welche auch mit dem Vorratsdruckeingang P11 des Anhängersteuerventils 2 verbunden sein kann, und eine zweite pneumatische Leitung P13 eingangsseitig mit dem Druckmittelspeicher 13 verbunden. Außerdem ist das Steuerventil 14 ausgangseitig über eine dritte pneumatische Leitung P14 mit einem ersten pneumatischen Eingang P17 des Wechselventils 16 verbunden. Das Redundanzventil 15 ist über die erste pneumatische Leitung P20 und eine vierte pneumatische Leitung P15 eingangsseitig mit dem Druckmittelspeicher 13 verbunden. Zudem ist das Redundanzventil 15 ausgangseitig über eine fünfte pneumatische Leitung P16 mit einem zweiten pneumatischen Eingang P18 des Wechselventils 16 verbunden.

Das Wechselventil 16 kann durch Anlegen des Vorratsdrucks aus dem Druckmittelspeicher 13 entweder durch Betätigen des Steuerventils 14 an seinem ersten Eingang P17 oder durch Betätigen des Redundanzventils 15 an seinem zweiten Eingang P18 durchgeschaltet werden, so dass der Vorratsdruck über den pneumatischen Ausgang P19 des Wechselventils 16 an den invertierenden Steuerdruckeingang P43 des Anhängersteuerventils 2 angelegt werden kann. Werden beide Steuerventil 14 und Redundanzventil 15 geschaltet, und somit beide Eingänge P17, P18 des Wechselventils 16 mit Druckluft beaufschlagt, gelangt bei unterschiedlichen Drücken der jeweils höhere Druck an den Steuerdruckeingang P43 des Anhängersteuerventils 2 und der jeweils andere Eingang P17, P18 wird druckbedingt durch ein Schließelement 17 des Wechselventils 20 gesperrt oder es bleiben bei gleichem Druck beide Eingänge P17, P18 des Wechselventils 16 offen.

Der elektrische Anschluss des Feststellbremsmoduls 3 an die elektronische Steuereinheit 4 der Bremsanlage 1 ist wie folgt: Das Steuerventil 14 ist über eine siebte und eine achte elektrische Leitung E7, E8 mit einer ersten elektrischen Schaltvorrichtung 18 verbunden. Die siebte elektrische Leitung E7 weist einen ersten High-Side-Schalter 18a auf, durch den der Magnetkreis des Steuerventils 14 an die Pluspol-Klemme TRM-30 eines nicht dargestellten elektrischen Energiespeichers anschließbar oder von diesem trennbar ist. Die achte elektrische Leitung E8 weist einen ersten Low-Side-Schalter 18b auf, durch den der Magnetkreis des Steuerventils 14 auf Masse gelegt oder von Masse getrennt werden kann.

Das Redundanzventil 15 ist über zwei neunte und zehnte elektrische Leitungen E9, E10 mit einer zweiten elektrischen Schaltvorrichtung 19 verbunden. Die neunte elektrische Leitung E9 weist einen zweiten High-Side-Schalter 19a auf, durch den der Magnetkreis des Redundanzventils 15 an die Pluspol-Klemme TRM-30 des elektrischen Energiespeichers sowie an eine Ausgangsklemme TRM-15 eines Zündschalters einer nicht dargestellten Zündanlage hinter dem Pluspol des elektrischen Energiespeichers anschließbar oder von diesen trennbar ist. Die zehnte elektrische Leitung E8 weist einen zweiten Low-Side-Schalter 19b auf, durch den der Magnetkreis des Redundanzventils 15 auf Masse gelegt oder von Masse getrennt werden kann. Das Steuerventil 14 und das Redundanzventil 15 beziehungsweise deren Magnetkreise können somit unabhängig voneinander über ihre zugeordneten ersten und zweiten Schaltvorrichtungen 18, 19 geschaltet werden. Die Schaltung jedes Magnetkreises kann dabei jeweils wahlweise und unabhängig voneinander über die zugeordneten High-Side-Schalter 18a, 19a oder Low-Side-Schalter 18b, 19b erfolgen. Die zwei Schaltvorrichtungen 18, 19 wirken mit einem elektronischen Schaltwerk 20 zusammen. In dem in Fig. 1 gezeigten Schaltzustand sind das Steuerventil 14 und das Redundanzventils 15 nicht bestromt und durch Federkraft geschlossen. Dadurch ist der Druckmittelspeicher 13 von dem Steuerdruckeingang P43 des Anhängersteuerventils 2 abgesperrt. Der Steuerdruckeingang P43 ist somit entlüftet. Am Steuerdruckausgang P22 beziehungsweise am "gelben" Steuerdruck-Kupplungskopf 22 kann also ein Steuerdruck anliegen.

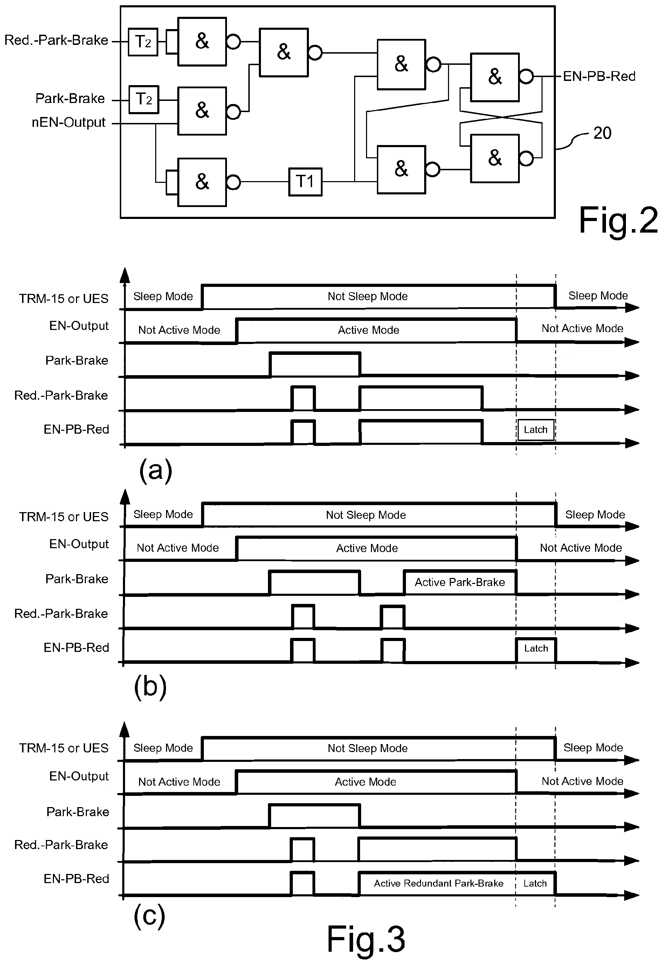

Das elektronische Schaltwerk 20 ist in Fig. 2 näher dargestellt. Das Schaltwerk 20 ist aus mehreren Logik-Schaltelementen, wie UND-Gliedern, ODER-Gliedern, Invertern und/oder Übertragungsgattern aufgebaut. Diese Bausteine bilden eine Kombination von Flip-Flop-Elementen. Die Funktionsweise der Elemente des Schaltwerks 20 muss hier nicht im Einzelnen erläutert werden. Wichtig ist lediglich, dass das Schaltwerk 20 eine Selbsthaltefunktion für Eingangs- und/oder Ausgangsvariablen aufweist, welche abhängig von einem jeweiligen Spannungspegel der Eingangs- und/oder Ausgangsignale den logischen Wert "1" oder den logischen Wert "0" annehmen können, und dass das Schaltwerk 20 in der Lage ist, Schaltzustände des Steuerventils 14 und des Redundanzventils 15 zu erfassen beziehungsweise zu speichern. Das Schaltwerk 20 weist einen ersten Eingang "Red.-Park-Brake", der den Schaltzustand des Redundanzventils 15 repräsentiert und einen zweiten Eingang "Park-Brake", der den Schaltzustand des Steuerventils 14 repräsentiert auf. Ein dritter Eingang "nEN-Output", ist für ein Schaltsignal oder ein anderes Signal der elektronischen Steuereinheit 4 vorgesehen. Ferner weist das Schaltwerk 20 einen Ausgang auf, der ein Schaltsignal oder ein anderes Steuersignal "EN-PB-Red." für das Redundanzventil 15 zur Verfügung stellt. Demnach ist der Magnetkreis des Redundanzventils 15 mit einer Speicherschaltung in der Ansteuerung des Redundanzventils 15 durch die elektronische Steuereinheit 4 versehen.

Fig. 3 zeigt zur Veranschaulichung der Wirkungsweise des Schaltwerks 20 ein Impulsdiagramm mit drei beispielhaften Impulsverläufen (a), (b), (c) von für die Selbsthaltefunktion relevanten Signalen wie ein Zündschaltersignal "TRM-15/UES", ein Steuersignal "EN-Output", ein Steuerventilsignal "Park-Brake", ein Redundanzventilsignal "Red.-Park-Brake" sowie ein Redundanzventilausgangssignal "EN-PB-Red." Wichtig dabei ist, dass in einem Auffangregister "Latch" jeweils der letzte Schaltzustand vor einem möglichen Fehlerereignis eingefroren wird. Das Steuersignal "EN-Output" kommt von einem unabhängigen Sicherungsrechner, welcher den Hauptrechner (Microcomputer) überwacht, und die Endstufen frei gibt.

Fällt die elektronische Steuereinheit 4 aus oder wird ein fehlerhafter Betrieb der Steuereinheit 4 erkannt, also im Redundanzfall, hält das Schaltwerk 20 den letzten Zustand des Steuerventils 14 oder des Redundanzventils 15 fest. Dies erfolgt solange die Steuereinheit 4 nicht in einen betriebssicheren Ruhezustand "Sleep Mode" wechselt oder der Zündschalter über die Klemme TRM-15 ausgeschaltet wird. Die Selbsthaltefunktion des Schaltwerks 20 wirkt als eine Speicherschaltung mittels der das Redundanzventil 15 angesteuert werden kann. Die Ansteuerung des Magnetkreises des Redundanzventils 15 durch diese Speicherschaltung des Schaltwerks 20 kann entweder über den High-Side-Schalter 19a oder über den Low-Side-Schalter 19b erfolgen. Der jeweils andere Schalter 19a, 19b ist dauerhaft geschaltet, solange die Selbsthaltefunktion des Schaltwerks 20 oder die eingeschaltete Zündanlage aktiviert ist. Im Ergebnis hat die Ansteuerung des Redundanzventils 15 durch die Speicherschaltung des Schaltwerks 20 die Wirkung, dass nicht unbeabsichtigt und unerwartet der Steuerdruckeingang P43 des Anhängersteuerventils 2 entlüftet wird und in der Folge nicht unbeabsichtigt und unerwartet Steuerdruck am Steuerdruckausgang P22 des Anhängersteuerventils 2 erzeugt werden kann. Dadurch ist der Anhänger 5 vor einer unbeabsichtigten und unerwarteten Betätigung der Feststellbremsfunktion der Anhängerbremse 6 des Anhängers 5 geschützt.

### Bezugszeichenliste (Bestandteil der Beschreibung)

- 1: Bremsanlage eines Fahrzeugzuges
- 2: Anhängersteuerventil
- 3: Feststellbremsmodul
- 4: Elektronische Steuereinheit
- 5: Anhängefahrzeug
- 6: Anhängerbremse
- 7: Erstes Regelventil des Anhängersteuerventils
- 8: Zweites Regelventil des Anhängersteuerventils
- 9: Drittes Regelventil des Anhängersteuerventils
- 10: Drosselventil des Anhängersteuerventils
- 11: Druckventil des Anhängersteuerventils
- 12: Drucksensor des Anhängersteuerventils
- 13: Druckmittelspeicher mit Druckmittelvorrat
- 14: Steuerventil des Feststellbremsmodul
- 15: Redundanzventil des Feststellbremsmoduls
- 16: Wechselventil des Feststellbremsmoduls
- 17: Schließmittel des Wechselventils
- 18: Erste elektrische Schaltvorrichtung
- 18a: Erste High-Side-Schalter
- 18b: Erster Low-Side-Schalter
- 19: Zweite elektrische Schaltvorrichtung
- 19a: Zweiter High-Side-Schalter
- 19b: Zweiter Low-Side-Schalter
- 20: Elektronisches Schaltwerk
- 21: Vorratsdruck-Kupplungskopf
- 22: Steuerdruck-Kupplungskopf
- E1: Erste elektrische Verbindungsleitung
- E2: Zweite elektrische Verbindungsleitung
- E3: Dritte elektrische Verbindungsleitung
- E4: Vierte elektrische Verbindungsleitung
- E5: Fünfte elektrische Verbindungsleitung
- E6: Sechste elektrische Verbindungsleitung
- E7: Siebte elektrische Verbindungsleitung
- E8: Achte elektrische Verbindungsleitung
- E9: Neunte elektrische Verbindungsleitung
- E10: Zehnte elektrische Verbindungsleitung
- P3: Entlüftungsausgang am Anhängersteuerventil
- P11: Vorratsdruckeingang am Anhängersteuerventil
- P13: Zweite pneumatische Leitung des Feststellbremsmoduls
- P14: Dritte pneumatische Leitung des Feststellbremsmoduls
- P15: Vierte pneumatische Leitung des Feststellbremsmoduls
- P16: Fünfte pneumatische Leitung des Feststellbremsmoduls
- P17: Erster pneumatischer Eingang des Wechselventils
- P18: Zweiter pneumatischer Eingang des Wechselventils
- P19: Pneumatischer Ausgang des Wechselventils
- P20: Erste pneumatische Leitung des Feststellbremsmoduls
- P21: Vorratsdruckausgang am Anhängersteuerventil
- P22: Steuerdruckausgang am Anhängersteuerventil
- P42: Redundanzdruckeingang am Anhängersteuerventil
- P43: Steuerdruckeingang am Anhängersteuerventil
- TRM-15: Ausgangsklemme eines Zündschalters
- TRM-30: Pluspol-Klemme an elektrischem Energiespeicher

## Patentansprüche

1. Bremsanlage (1) für einen Fahrzeugzug, bestehend aus einem Zugfahrzeug mit einer Zugfahrzeugbremse und einem Anhängefahrzeug (5) mit einer Anhängerbremse (6), wobei das Zugfahrzeug eine aus einem elektrischen Energiespeicher des Zugfahrzeugs versorgte Zündanlage für einen Antriebsmotor des Zugfahrzeugs aufweist, wobei die Bremsanlage (1) druckmittelbetrieben ist, mit einem Anhängersteuerventil (2) und einem Feststellbremsmodul (3), welche elektrisch steuerbar sind, und mit einer mit dem Anhängersteuerventil (2) sowie mit dem Feststellbremsmodul (3) elektrisch verbundenen elektronischen Steuereinheit (4) zum Steuern der Anhängerbremse (6) des Anhängefahrzeugs (5), wobei das Feststellbremsmodul (3) eingangsseitig mit einem Druckmittelspeicher (13) der Bremsanlage (1) des Fahrzeugzugs sowie ausgangsseitig mit einem Steuerdruckeingang (P43) des Anhängersteuerventils (2) zur schaltbaren Druckbeaufschlagung oder Druckentlastung des Steuerdruckeingangs (P43) des Anhängersteuerventils (2) druckmittelverbunden ist, und wobei das Feststellbremsmodul (3) eine Redundanzschaltung zur Druckbeaufschlagung oder Druckentlastung des Steuerdruckeingangs (P43) des Anhängersteuerventils (2) auch für den Fall einer Betriebsstörung oder eines Ausfalls der elektronischen Steuereinheit (4) aufweist, **dadurch gekennzeichnet, dass** das Feststellbremsmodul (3) ein als Steuerventil (14) ausgebildetes erstes Wegeventil, ein als Redundanzventil (15) ausgebildetes zweites Wegeventil und ein druckgesteuertes Wechselventil (16) aufweist,
- wobei das Steuerventil (14) und das Redundanzventil (15) jeweils eingangsseitig mit dem Druckmittelspeicher (13) und ausgangsseitig mit jeweils einem Eingang (P17, P18) des Wechselventils (16) druckmittelverbunden sind,
- wobei ein Ausgang (P19) des Wechselventils (16) mit dem Steuerdruckeingang (P43) des Anhängersteuerventils (2) druckmittelverbunden ist, so dass ein Eingangsdruck an einem oder beiden Eingängen (P17, P18) des Wechselventils (16) an den Steuerdruckeingang (P43) des Anhängersteuerventils (2) durchleitbar ist,
- wobei das Steuerventil (14) über eine erste elektrische Schaltvorrichtung (18) schaltbar mit dem elektrischen Energiespeicher des Zugfahrzeugs verbindbar ist,
- wobei das Redundanzventil (15) über eine zweite elektrische Schaltvorrichtung (19) schaltbar mit dem elektrischen Energiespeicher und mit der Zündanlage des Zugfahrzeugs verbindbar ist,
- wobei in einer ersten Schaltstellung des Steuerventils (14) und/oder des Redundanzventils (15) der Druckmittelspeicher (13) von dem Steuerdruckeingang (P43) des Anhängersteuerventils (2) abgesperrt ist und in einer zweiten Schaltstellung des Steuerventils (14) und/oder des Redundanzventils (15) der Druckmittelspeicher (13) mit dem Steuerdruckeingang (P43) des Anhängersteuerventils (2) druckmittelverbunden ist,
- und dass die elektronische Steuereinheit (4) ein elektronisches Schaltwerk (20) mit einer Selbsthaltefunktion aufweist,
- wobei das Redundanzventil (15) und das Steuerventil (14) über dieses Schaltwerk (20) miteinander elektronisch verknüpft sind und das Redundanzventil (15) steuerbar ist,
- wobei die Selbsthaltefunktion die jeweils aktuelle erste Schaltstellung oder zweite Schaltstellung des Redundanzventils (15) oder des Steuerventils (14) speichert,
- so dass im Falle einer erkannten Betriebsstörung oder eines Ausfalls der elektronischen Steuereinheit (4) die letzte fehlerfreie Schaltstellung des Steuerventils (14) oder des Redundanzventils (15) gehalten wird, solange die elektronische Steuereinheit (4) nicht in einen betriebssicheren Ruhezustand wechselt oder die Zündanlage nicht ausgeschaltet wird.

2. Bremsanlage nach Anspruch 1, **dadurch gekennzeichnet, dass** das Steuerventil (14) und das Redundanzventil (15) als 3/2-Wegeventile ausgebildet sind, welche in Öffnungsrichtung elektromagnetisch betätigbar sind und in Ruhestellung durch Federkraft geschlossen sind.

3. Bremsanlage nach Anspruch 1 oder 2, **dadurch gekennzeichnet, dass** das Steuerventil (14) und das Redundanzventil (15) in einem fehlerfreien Normalbetrieb der elektronischen Steuereinheit (4) unabhängig voneinander schaltbar sind.

4. Bremsanlage nach einem der Ansprüche 1 bis 3, **dadurch gekennzeichnet, dass** die erste Schaltvorrichtung (18) und die zweite Schaltvorrichtung (19) für die elektrische Versorgung des Steuerventils (14) und des Redundanzventils (15) voneinander entkoppelte elektrische Schaltkreise aufweisen, wobei dem Steuerventil (14) ein erster High-Side-Schalter (18a) zugeordnet ist, welcher den Magnetkreis des Steuerventils (14) schaltbar mit dem elektrischen Energiespeicher verbindet, wobei dem Steuerventil (14) ein erster Low-Side-Schalter (18b) zugeordnet ist, welcher den Magnetkreis des Steuerventils (14) schaltbar auf Masse legt, und wobei dem Redundanzventil (15) ein zweiter High-Side-Schalter (19a) zugeordnet ist, welcher den Magnetkreis des Redundanzventils (15) schaltbar mit der Zündanlage und mit dem elektrischen Energiespeicher des Zugfahrzeugs verbindet, und wobei dem Redundanzventil (15) ein zweiter Low-Side-Schalter (19b) zugeordnet ist, welcher den Magnetkreis des Redundanzventils (15) schaltbar auf Masse legt.

5. Fahrzeugzug, wie landwirtschaftliche Zugmaschinen-Anhänger-Kombination, Sattelzug oder Brückenzug, mit einer Bremsanlage mit den Merkmalen von wenigstens einem der Vorrichtungsansprüche.

## Claims

1. Braking system (1) for a vehicle combination, consisting of a tractor vehicle with a tractor vehicle brake and a trailer vehicle (5) with a trailer brake (6), the tractor vehicle having an ignition system for a drive engine of the tractor vehicle supplied from an electrical energy accumulator of the tractor vehicle, the braking system (1) being operated by pressure medium, having a trailer control valve (2) and a parking brake module (3) which are electrically controllable, and having an electronic control unit (4) for the control of the trailer brake (6) of the trailer vehicle (5), electrically connected to the trailer control valve (2) and to the parking brake module (3), the parking brake module (3) being connected, in a manner which conducts pressure medium, on the input side to a pressure medium accumulator (13) of the braking system (1) of the vehicle combination and on the output side to a control pressure input (P43) of the trailer control valve (2) for the switchable pressurization or depressurization of the control pressure input (P43) of the trailer control valve (2), and the parking brake module (3) having a redundancy circuit for the pressurization or depressurization of the control pressure input (P43) of the trailer control valve (2) even for the case of a malfunction or a failure of the electronic control unit (4), **characterized in that** the parking brake module (3) comprises a first directional valve configured as a control valve (14), a second directional valve configured as a redundancy valve (15) and a pressure- controlled changeover valve (16),
- the control valve (14) and the redundancy valve (15) being respectively connected, in a manner which conducts pressure medium, on the input side to the pressure medium accumulator (13) and on the output side to a respective input (P17, P18) of the changeover valve (16),
- one output (P19) of the changeover valve (16) being connected, in a manner which conducts pressure medium, to the control pressure input (P43) of the trailer control valve (2), so that an input pressure at one or both inputs (P17, P18) of the changeover valve (16) can be passed through to the control pressure input (P43) of the trailer control valve (2),
- the control valve (14) being switchably connectable by means of a first electrical switching device (18) to the electrical energy accumulator of the tractor vehicle,
- the redundancy valve (15) being switchably connectable by means of a second electrical switching device (19) to the electrical energy accumulator and to the ignition system of the tractor vehicle,
- in a first switching position of the control valve (14) and/or the redundancy valve (15), the pressure medium accumulator (13) being blocked off from the control pressure input (P43) of the trailer control valve (2) and, in a second switching position of the control valve (14) and/or the redundancy valve (15), the pressure medium accumulator (13) being connected, in a manner which conducts pressure medium, to the control pressure input (P43) of the trailer control valve (2),
- and **in that** the electronic control unit (4) comprises an electronic switch unit (20) with a latching function,
- the redundancy valve (15) and the control valve (14) being electronically inter-connected by means of this switch unit (20) and the redundancy valve (15) being controllable,
- the latching function saving the respective current first switching position or second switching position of the redundancy valve (15) or the control valve (14),
- so that, in the event of a recognized malfunction or a failure of the electronic control unit (4), the last error-free switching position of the control valve (14) or the redundancy valve (15) is latched so long as the electronic control unit (4) does not switch to an operationally safe resting state or the ignition system is not switched off.

2. Braking system according to Claim 1, **characterized in that** the control valve (14) and the redundancy valve (15) are configured as 3/2-directional valves which are electromagnetically actuatable in the opening direction and are closed by spring force in the resting position.

3. Braking system according to Claim 1 or 2, **characterized in that** the control valve (14) and the redundancy valve (15) are switchable independently of each other in normal error-free operation of the electronic control unit (4).

4. Braking system according to one of Claims 1 to 3, **characterized in that** the first switching device (18) and the second switching device (19) have mutually decoupled electrical circuits for the electrical supply of the control valve (14) and the redundancy valve (15), the control valve (14) being assigned a first high-side switch (18a) which switchably connects the magnetic circuit of the control valve (14) to the electrical energy accumulator, the control valve (14) being assigned a first low-side switch (18b) which switchably connects the magnetic circuit of the control valve (14) to ground, and the redundancy valve (15) being assigned a second high-side switch (19a) which switchably connects the magnetic circuit of the redundancy valve (15) to the ignition system and to the electrical energy accumulator of the tractor vehicle, and the redundancy valve (15) being assigned a second low-side switch (19b) which switchably connects the magnetic circuit of the redundancy valve (15) to ground.

5. Vehicle combination, such as an agricultural tractor and trailer combination, a semi-trailer, or a platform road train, having a braking system with the features of at least one of the device claims.

## Revendications

1. Système de freinage (1) pour un train routier, composé d'un véhicule tracteur ayant un frein de véhicule tracteur et d'un véhicule remorque (5) ayant un frein de remorque (6), le véhicule tracteur possédant un équipement d'allumage, alimenté à partir d'un accumulateur d'énergie du véhicule tracteur, pour un moteur de propulsion du véhicule tracteur, le système de freinage (1) fonctionnant avec un fluide sous pression, comprenant une vanne de commande de remorque (2) et un module de frein de stationnement (3), qui peuvent être commandés électriquement, et comprenant une unité de commande (4) électronique, reliée à la vanne de commande de remorque (2) ainsi qu'au module de frein de stationnement (3), destinée à commander le frein de remorque (6) du véhicule remorque (5), le module de frein de stationnement (3) étant relié par fluide sous pression du côté de l'entrée à un accumulateur de fluide sous pression (13) du système de freinage (1) du train routier ainsi que du côté de la sortie à une entrée de pression de commande (P43) de la vanne de commande de remorque (2) en vue de charger en pression ou de soulager en pression de manière commutable l'entrée de pression de commande (P43) de la vanne de commande de remorque (2), et le module de frein de stationnement (3) possédant un circuit de redondance servant à charger en pression ou à soulager en pression l'entrée de pression de commande (P43) de la vanne de commande de remorque (2) même dans le cas d'un défaut de fonctionnement ou d'une panne de l'unité de commande (4) électronique, **caractérisé en ce que** le module de frein de stationnement (3) possède un premier distributeur réalisé sous la forme d'une vanne de commande (14), un deuxième distributeur réalisé sous la forme d'une vanne de redondance (15) et un sélecteur de circuit (16) commandé en pression,
- la vanne de commande (14) et la vanne de redondance (15) étant respectivement reliées par fluide sous pression du côté de l'entrée à l'accumulateur de fluide sous pression (13) et du côté de la sortie respectivement à une entrée (P17, P18) du sélecteur de circuit (16),
- une sortie (P19) du sélecteur de circuit (16) étant reliée par fluide sous pression à l'entrée de pression de commande (P43) de la vanne de commande de remorque (2), de sorte qu'une pression d'entrée au niveau de l'une ou des deux entrées (P17, P18) du sélecteur de circuit (16) peut être transmise à l'entrée de pression de commande (P43) de la vanne de commande de remorque (2),
- la vanne de commande (14) pouvant être reliée de manière commutable électriquement à l'accumulateur d'énergie du véhicule tracteur par le biais d'un premier dispositif de commutation électrique (18),
- la vanne de redondance (15) pouvant être reliée de manière commutable électriquement à l'accumulateur d'énergie du véhicule tracteur par le biais d'un deuxième dispositif de commutation électrique (19),
- dans une première position de commutation de la vanne de commande (14) et/ou de la vanne de redondance (15), l'accumulateur de fluide sous pression (13) étant isolé de l'entrée de pression de commande (P43) de la vanne de commande de remorque (2) et dans une deuxième position de commutation de la vanne de commande (14) et/ou de la vanne de redondance (15), l'accumulateur de fluide sous pression (13) étant relié par fluide sous pression à l'entrée de pression de commande (P43) de la vanne de commande de remorque (2),
- et **en ce que** l'unité de commande (4) électronique possède un mécanisme de commutation (20) avec une fonction d'automaintien,
- la vanne de redondance (15) et la vanne de commande (14) étant combinées électroniquement par le biais de ce mécanisme de commutation (20) et la vanne de redondance (15) pouvant être commandée,
- la fonction d'automaintien mémorisant la première position de commutation ou la deuxième position de commutation respectivement actuelle de la vanne de redondance (15) ou de la vanne de commande (14),
- de sorte que dans le cas d'un défaut de fonctionnement reconnu ou d'une panne reconnue de l'unité de commande (4) électronique, la dernière position de commutation exempte de défaut de la vanne de commande (14) ou de la vanne de redondance (15) est maintenue tant que l'unité de commande (4) électronique ne bascule pas dans un état de repos opérationnellement fiable ou que l'équipement d'allumage n'est pas déconnecté.

2. Système de freinage selon la revendication 1, **caractérisé en ce que** la vanne de commande (14) et la vanne de redondance (15) sont réalisées sous la forme de distributeurs 3/2 qui peuvent être actionnés de manière électromagnétique dans le sens de l'ouverture et sont fermés en position de repos par la force d'un ressort.

3. Système de freinage selon la revendication 1 ou 2, **caractérisé en ce que** la vanne de commande (14) et la vanne de redondance (15), dans un fonctionnement normal sans défaut de l'unité de commande (4) électronique, peuvent être commutées indépendamment l'une de l'autre.

4. Système de freinage selon l'une des revendications 1 à 3, **caractérisé en ce que** le premier dispositif de commutation (18) et le deuxième dispositif de commutation (19) possèdent des circuits électriques découplés électriquement l'un de l'autre pour l'alimentation électrique de la vanne de commande (14) et de la vanne de redondance (15), un premier commutateur au niveau haut (18a) étant associé à la vanne de commande (14), lequel relie de manière commutable le circuit magnétique de la vanne de commande (14) à l'accumulateur d'énergie électrique, un premier commutateur au niveau bas (18b) étant associé à la vanne de commande (14), lequel relie de manière commutable le circuit magnétique de la vanne de commande (14) à la masse, et un deuxième commutateur au niveau haut (19a) étant associé à la vanne de redondance (15), lequel relie de manière commutable le circuit magnétique de la vanne de redondance (15) à l'équipement d'allumage, et un deuxième commutateur au niveau bas (19b) étant associé à la vanne de redondance (15), lequel relie de manière commutable le circuit magnétique de la vanne de redondance (15) à la masse.

5. Train routier, comme une combinaison de tracteurs et remorques agricoles, train routier articulé ou train routier à plateforme, comprenant un système de freinage ayant les caractéristiques d'au moins l'une des revendications de système.
